# EUROPÄISCHE PATENTANMELDUNG

(11) **EP 1 091 279 A2**
(43) Veröffentlichungstag der Anmeldung: **11.04.2001**
(21) Anmeldenummer: 00121860.1
(22) Anmeldetag: 06.10.2000
(51) Int. Cl.: G06F 1/18

(54) **PC mit EMV-Kontaktierung zwischen Gehäuse und Steckeranschlussfeld**

(30) Priorität: 06.10.1999 DE 19948092
(71) Anmelder: Fujitsu Siemens Computers GmbH, 81739 München (DE)
(72) Erfinder: Neukam, Wilhelm, 86399 Bobingen (DE); Seidel, Bernd, 08209 Auerbach (DE); Scherer, August, 86424 Dinkelscherben (DE)
(74) Vertreter: Hermann, Uwe, Dipl.-Ing.

(57) **Zusammenfassung**

Bei einem kleinbauenden PC, beispielsweise einem Notebook, mit ein Motherboard (2), einem Steckeranschlußfeld (42) mit mehreren Schnittstellensteckern und zwei Einschubports (16,18) für Moduleinschübe sind das Steckeranschlußfeld und ein Stecker (76) für den Moduleinschub (20) mit dem Motherboard (2) verbunden. Das Motherboard (2) ist nahe bei den Steckern (74,76) für den Moduleinschub abgefangen. Zwischen dem oberen und unteren Rändern des Steckeranschlußfeldes (42) und dem Deckel und der Unterschale des PCs ist eine leitende Dichtschnur oder ein leitender Dichtwulst als EMV-Kontakteinrichtung vorgesehen ist.

## Beschreibung

Die Erfindung betrifft einen PC, der in einem Gehäuse mit einem Deckel, einem Boden und Seitenwänden ein Motherboard mit Rechnerkomponenten und wenigstens ein Steckeranschlußfeld mit mehreren Schnittstellensteckern und wenigstens einem Einschubport für einen Moduleinschub aufweist, wobei das Steckeranschlußfeld und ein bezüglich seiner Position im Innern des PCs kritischer Stecker für den Moduleinschub mit dem Motherboard verbunden sind.

Besonders kleinbauende oder portable PC's , wie beispielsweise Laptops, Notebooks und dergleichen, sind aus Platzgründen so aufgebaut, daß das Motherboard mit dem Steckeranschlußfeld und den Steckern für die Moduleinschübe verbunden ist. Das Steckeranschlußfeld wird dann außerdem an eine feste Gehäusewand angeschraubt. Wenn sich die Moduleinschübe auf der dem Steckeranschlußfeld gegenüberliegenden Seite des PC's befinden und insbesondere, wenn sie quer zur Verschraubungsrichtung zwischen Motherboard und Steckeranschlußfeld angeordnet sind, ergibt sich das Problem, daß wegen der Toleranzaufsummierung entweder der Modelleinschub sich nicht einwandfrei stecken läßt oder daß das Steckeranschlußfeld nicht einwandfrei in der entsprechenden Wand montiert ist. Da die Modelleinschübe seitlich nur ein sehr geringes Spiel haben, damit der Stecker in dem Modelleinschub den komplementären Stecker an dem Motherboard, dessen Position im Innern des PCs kritisch ist, sicher finden kann, ist die Lage des Motherboards mit dem Anschlußstecker für den Modelleinschub genau vorbestimmt. Wenn das Motherboard über das Steckeranschlußfeld an der Gehäuserückwand angeschraubt wird, kann die erforderliche genaue Positionierung des Motherboards im Bereich des Steckers für den Modelleinschub wegen der Toleranzaufsummierung nicht mehr einwandfrei sicher gestellt werden. Wenn andererseits das Motherboard korrekt positioniert wird, so daß sich die Stecker des Moduleinschubs und der komplementäre Stecker an dem Motherboard sicher finden, ergibt sich wegen der Toleranzaufsummierung bis zum Steckeranschlußfeld entweder zu viel Spielraum zwischen der Gehäuserückwand und dem Steckeranschlußfeld, was beim Verschrauben zu Spannungen und/oder zu Beschädigungen im beziehungsweise am Steckeranschlußfeld oder dazu führt, daß bei der Montage die Gehäuserückwand dem Steckeranschlußfeld im Wege ist.

Außer dem Vorhandensein von Moduleinschüben und deren Steckverbindung mit dem Motherboard können auch andere Ausgesatltungen des inneren Aufbaus des PCs dazu führen, daß das Motherboard genau positioniert werden muß. So kann eine Steckverbindung zwischen dem Motherboard in der Unterschale und einem zweiten Board, das in den Deckel montiert ist, zur Folge haben, daß der am Motherboard befestigte Stecker bezüglich seiner Position im Innern des PCs kritisch ist. Entsprechendes kann auch für eine Steckverbindung zwischen einem Stecker an einer an der Unterschale angeordneten Festplatte und einem Stecker am Motherboard gelten. Diesen Anordnungen ist gemeinsam, daß das Motherboard bei dem kritischen Stecker genau positioniert werden muß.

Dem gegenüber liegt der Erfindung die Aufgabe zugrunde, einen PC der eingangs genannten Art so weiter zu bilden, daß einerseits eine genaue Positionierung des Motherboards gewährleistet wird und daß andererseits eine EMV (elektromagnetische Verträglichkeit)-Kontaktierung wenigstens zwischen dem Steckeranschlußfeld und dem Gehäuse des PCs bereitgestellt wird.

Dazu ist der erfindungsgemäße PC dadurch gekennzeichnet, daß das Motherboard zur genauen Positionierung nahe bei dem kritischen Stecker abgefangen ist, und daß wenigstens zwischen dem oberen und/oder unteren Rändern des Steckeranschlußfeldes und dem Deckel beziehungsweise der Unterschale des PCs eine leitende Dichtschnur oder ein leitender Dichtwulst als EMV-Kontakteinrichtung vorgesehen ist.

Durch diese Ausgestaltung des PCs wird das Motherboard an einem einzigen, exakt definierten Punkt abgefangen, der nah bei dem mit dem Motherboard verbundenen Stecker zum Anschluß des Moduleinschubes angeordnet ist. Von dem Abfangungspunkt aus sind die Lagetoleranzen zu dem Stecker für den Moduleinschub vernachlässigbar, so daß ein sicheres Stecken der Moduleinschübe gewährleistet ist. Andererseits wird das erwähnte Problem, das mit der genauen Positionierung des Motherboards verbunden ist, gelöst, indem das Steckeranschlußfeld unter Beibehaltung einer sicheren und zuverlässigen EMV-Kontaktierung in der Gehäuserückwand 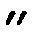 schwimmend" aufgenommen wird, sodass Toleranzen bei der Montage keine Auswirkungen mehr auf die ordnungsgemäße Montage des Steckeranschlußfeldes in der Gehäuserückwand hat.

Eine vorteilhafte Ausgestaltung des erfindungsgemäßen PCs ist dadurch gekennzeichnet, daß die Abfangung eine punktförmige Verschraubung oder ein linienförmiger Anschlag zwischen dem Motherboard und der Unterschale des PCs ist. Damit wird eine einfache und sehr genaue Positionierung beziehungsweise Abfangung des Motherboards gegenüber der Unterschale und damit den Einschubports für den Modelleinschub erreicht.

Eine weitere vorteilhafte Ausgestaltung des erfindungsgemäßen PCs ist dadurch gekennzeichnet, daß zusätzlich zwischen den Seitenwänden und dem Deckel des PCs eine leitende Dichtschnur oder ein leitender Dichtwulst als EMV-Kontakteinrichtung vorgesehen ist. Damit wird das Prinzip der EMV-Kontaktierung nicht nur zur Montage des Steckeranschlußfeldes, sondern auch zur EMV-Kontaktierung zwischen Deckel und Seitenwänden angewendet, so daß eine EMV-Kontaktierung rundum zwischen Deckel und Seitenwänden gewährleistet ist.

Eine weitere vorteilhafte Ausgestaltung des erfindungsgemäßen PCs ist dadurch gekennzeichnet, daß der Durchmesser der Dichtschnur oder des Dichtwulstes größer ist als der Abstand vom Deckel des PCs zu den Seitenrändern des Steckeranschlußfeldes oder zu den Seitenwänden des Gehäuses plus einem Toleranzabstand ist. Damit wird in vorteilhafter Weise bei der Montage des Steckeranschlußfeldes beziehungsweise beim Verschrauben der Unterschale des PCs mit dem Deckel die Dichtschnur beziehungsweise der Dichtwulst verspannt oder eingeklemmt, was zu einer sicheren EMV-Kontaktierung unabhängig von der Toleranzlage des Steckeranschlußfeldes führt.

Eine weitere vorteilhafte Ausgestaltung des erfindungsgemäßen PCs ist dadurch gekennzeichnet, daß die Dichtschnur in einem Graben am Deckel des PCs beziehungsweise an der Unterschale des PCs angeordnet ist, wobei der Graben in vorteilhafter Weise die Dichtschnur aufnimmt und derart positioniert, daß sie bei der Montage die gewünschte Funktion der EMV-Kontaktierung gewährleistet.

Eine weitere vorteilhafte Ausgestaltung des erfindungsgemäßen PCs ist dadurch gekennzeichnet, daß der Graben einen bogenförmigen Boden aufweist, wobei die Dichtschnur seitlich geführt und bei der Verspannung, die bei der Montage erzeugt wird, zentriert wird.

Eine weitere vorteilhafte Ausgestaltung des erfindungsgemäßen PCs ist dadurch gekennzeichnet, daß der Graben einen rechteckigen Querschnitt aufweist, wobei insbesondere die Breite des Grabens größer als der Durchmesser der Dichtschnur oder des Dichtwulstes ist. Dadurch kann die Dichtschnur in vorteilhafter Weise seitlich ausweichen, wenn entsprechend große Toleranzen auftreten.

Eine weitere vorteilhafte Ausgestaltung des erfindungsgemäßen PCs ist dadurch gekennzeichnet, daß die Dichtschnur ein von dem Steckeranschlußfeld oder dem Deckel separates Bauteil ist. Die Dichtschnur kann somit an dem Gehäuse, insbesondere dem Deckel, vor der Montage des Gehäuses eingelegt werden, was die Handhabung der übrigen Gehäuseteile bei der Montage erleichtert.

Eine weitere vorteilhafte Ausgestaltung des erfindungsgemäßen PCs ist dadurch gekennzeichnet, daß der Dichtwulst mit den Seitenrädern des Steckeranschlußfeldes, vorzugsweise durch Dispensen, verbunden ist. Damit entfällt ein separates Hantieren mit der Dichtschnur, und andererseits wird der Dichtwulst beim Zusammenbau des Gehäuses von selbst positioniert.

Eine weitere vorteilhafte Ausgestaltung des erfindungsgemäßen PCs ist dadurch gekennzeichnet, daß die Dichtschnur oder der Dichtwulst aus einem leitfähigen Kunststoffmaterial, vorzugsweise aus Silikon, besteht. Kunststoffmaterial läßt sich bekanntlich durch Zumischen von leitfähigen Teilchen elektrisch leitfähig machen und ist damit für den hier vorgegebenen Zweck besonders geeignet. Dies gilt insbesondere für Silikon.

Eine weitere vorteilhafte Ausgestaltung des erfindungsgemäßen PCs ist schließlich dadurch gekennzeichnet, daß die Dichtschnur oder der Dichtwulst aus selbstklebendem Material bestehen, was die Montage erheblich vereinfacht.

Ausführungsbeispiele der Erfindung werden nun anhand der beiliegenden Zeichnungen beschrieben. Es zeigen:
- Figur 1: eine schematische Darstellung den internen Aufbau eines Notebooks;
- Figur 2: eine teilweise Schnittdarstellung durch den Deckel, die Unterschale und ein Steckeranschlußfeld nach einem ersten Ausführungsbeispiel der Erfindung; und
- Figur 3: eine teilweise Schnittdarstellung durch den Deckel, die Unterschale und ein Steckeranschlußfeld eines anderes Ausführungsbeispieles; und
- Figur 4: einen Abschnitt eines Steckeranschlußfeldes in perspektivischer Darstellung mit Dichtwulsten.

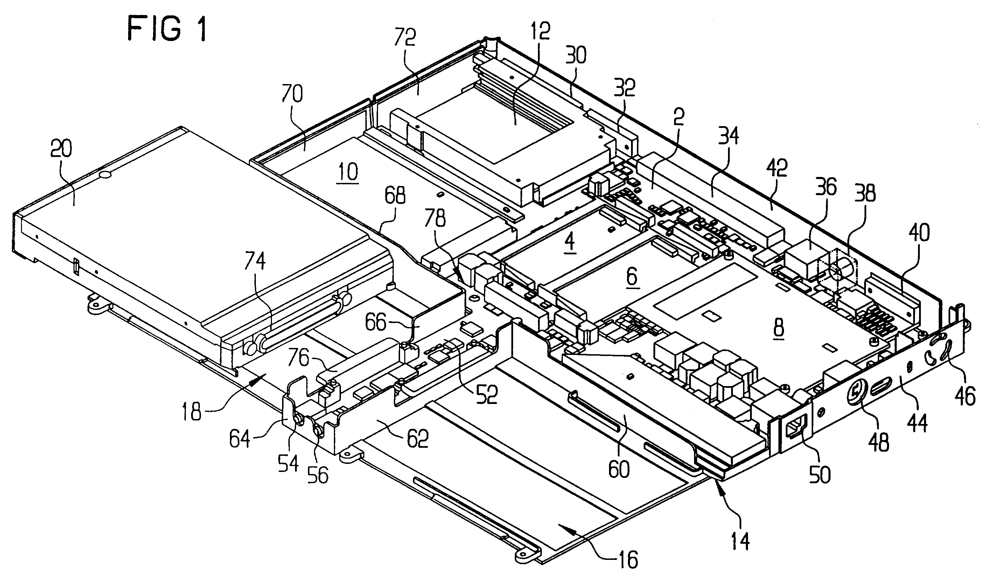

In Figur 1 ist der interne Aufbau eines Notebooks mit den hauptsächlichen Teilen dargestellt. Das Notebook weist ein Motherboard 2 auf, auf dem Arbeitsspeicher 4, 6, ein Prozessor 8, eine Festplatte 10, ein PC-Card-Port 12 und weitere Rechnerkomponenten montiert sind. Das Motherboard 2 ist, wie üblich, mit einer Unterschale 14 unter Abstand zu dieser verbunden beziehungsweise verschraubt. Auf der Unterschale 14 sind ferner zwei Einschubports 16, 18 vorgesehen, wobei in dem Einschubport 18 ein Laufwerk 20 dargestellt ist, welches noch nicht ganz in den Einschubport 18 eingeschoben ist.

Mit dem Motherboard 2 sind eine Reihe von Steckern oder Schnittstellen, beispielsweise ein Druckeranschlußstecker 30, ein Monitoranschlußstecker 32, ein Dockingstecker 34, ein USP-Stecker 36 (USP = Universal Serial Port), ein Tastaturport 38 und eine Gameport 40, befestigt, die ihrerseits an einem Steckeranschlußfeld 42 befestigt sind, welches die Rückwand des Notebooks bildet.

Mit dem Motherboard 2 ist ferner ein seitliches Steckeranschlußfeld 44 verbunden, an dem Lüftungsschlitze 46, ein Mausstecker 48 und LAN-Stecker 50 dargestellt sind. Das Steckeranschlußfeld 44 ist ebenfalls mit dem Motherboard 2 verbunden. Schließlich hat das Motherboard 2 noch einen Ansatz 52, der bis zur Vorderseite des Notebooks reicht und Steckerbuchsen 54, 56 zum Anschluß eines Mikrofons beziehungsweise von Lautsprechern aufweist.

Das Motherboard 2 hat somit eine 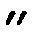 T"-Form und reicht von der Vorderseite des Notebooks bis zu dessen Rückseite, so daß sich Montagetoleranzen praktisch auf die gesamte innere Struktur des Notebooks auswirken. Das Motherboard ist nach außen durch die Steckeranschlußfelder 42, 44 und durch Seitenwände 60, 62, 64, 66, 68, 70, 72 abgeschlossen, und es ist eine EMV-Kontaktierung zwischen dem Deckel und den Seitenwänden beziehungsweise den Steckeranschlußfeldern vorhanden.

Wie in Figur 1 gezeigt ist, wird der Moduleinschub 20 seitlich , das heißt senkrecht zu der Richtung von der Vorderseite zu der Rückseite des Notebooks, in den Einschubport 18 eingeschoben. Beim Einschieben des Moduleinschubs 20 muß ein an dessen Rückseite angeordneter Stecker 74 exakt einen Stecker 76 treffen, der an dem Motherboard 2 befestigt ist. Wenn, wie es im Stand der Technik üblig ist, das Steckeranschlußfeld 42 an der Rückseite des Notebooks verschraubt wird, wobei die Schraubenrichtung senkrecht steht auf der Einschubrichtung des Einschubmodus 20 in den Einschubport 14, summieren sich die Toleranzen von der Rückwand bis zu der Lage der Stecker 74, 76 auf, so daß ein sicheres Stecken nicht gewährleistet ist. Daher wird das Motherboard 2 bei dem vorliegenden Notebook durch eine Abfangungsschraube 78 abgefangen, die nahe bei den Steckern 74, 76 des Moduleinschubs 20 beziehungsweise des Motherboards 76 liegt und das Motherboard 2 punktförmig exakt abfängt. Damit ist gewährleistet, daß die Stecker 74, 76 exakt ineinander geschoben werden, wenn der Modul-einschub 20 in den Modulport 18 eingeführt wird.

Alternativ kann das Motherboard nahe bei dem kritischen Stecker durch einen linienförmigen Anschlag (nicht gezeigt) abgefangen werden.

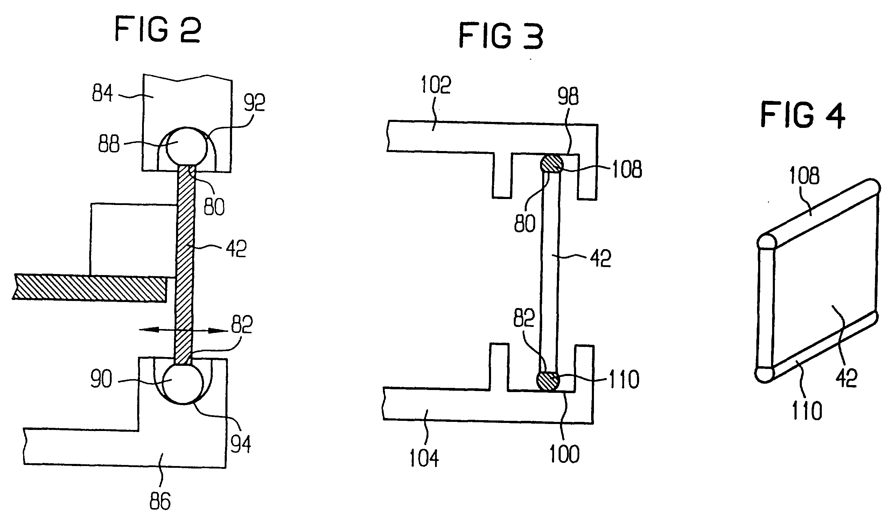

Die Toleranzen, die sich von der Abfangungsschraube 78 bis zur Rückseite des Notebooks aufsummieren, werden, wie in Figur 2 gezeigt ist, dadurch aufgenommen, daß zwischen dem oberen Rand 80 des Steckeranschlußfeldes und dem unteren Rand des Steckeranschlußfeldes und dem Deckel 84 beziehungsweise der Unterschale 86 je eine leitende flexible Dichtschnur 88, 90 als EMV-Kontakteinrichtung vorgesehen ist.

Um eine befriedigende EMV-Kontaktierung zu gewährleisten, ist der Durchmesser der Dichtschnur größer als der Abstand vom Deckel 84 beziehungsweise der Unterschale 86 des Notebooks zu den Seitenrändern des Steckeranschlußfeldes 42 plus einem Toleranzabstand.

Die Dichtschnüre 88, 90 sind jeweils in einem Graben 92 beziehungsweise 94 am Deckel 84 beziehungsweise 88 der Unterschale 86 angeordnet, wobei die Gräben 92, 94 einen bogenförmigen Boden aufweisen. Die Dichtschnure 88, 90 sind somit von dem Steckeranschlußfeld 42 oder dem Deckel 84 beziehungsweise der Unterschale 86 separate Bauteile. Wenn die Dichtschnüre 88, 90, wie dies bevorzugt ist, selbstklebend sind, können die Dichtschnüre in die Gräben eingelegt werden und sind dort bis zur Montage unverlierbar.

Figur 3 zeigt eine andere Ausführungsform, bei der Gräben 98, 100 an dem Deckel 102 beziehungsweise der Unterschale 104 vorgesehen sind, die einen rechteckigen Querschnitt haben. In diesem Ausführungsbeispiel ist das Steckeranschlußfeld 42 an seinem oberen Rand 80 und seinem unteren Rand 82 mit Dichtwulsten 108, 110 versehen, die ebenfalls wie die oben erwähnten Dichtschnüre 88, 90 selbstklebend ausgeführt sind. Die Breite der Gräben ist bei diesem Ausführungsbeispiel größer als der Durchmesser der Dichtwulste, so daß größere Toleranzen als bei dem Ausführungsbeispiel von Figur 2 aufgenommen werden können.

Auch bei diesem Ausführungsbeispiel ist der Durchmesser des Dichtwulstes größer als der Abstand vom Deckel 102 beziehungsweise von der Unterschale 104 des Notebooks zu den Seitenrändern des Steckeranschlußfeldes plus einem Toleranzabstand.

Figur 4 zeigt eine perspektivische Darstellung eines Abschnittes des Steckeranschlußfeldes 42 mit den Dichtwulsten 109, 110, die durch Dispensen an dem Steckeranschlußfeld aufgebracht sind. Als Material für die Dichtschnüre oder die Dichtwulste eignet sich besonders ein leitfähiges Kunststoffmaterial, vorzugsweise Silikon. Das Kunststoffmaterial sollte, wie oben dargelegt wurde, selbstklebend sein.

Eine entsprechende Anordnung für die Toleranzabfangung, wie sie oben im Zusammenhang mit dem Steckeranschlußfeld 42 beschrieben wurde, ist auch im Zusammenhang mit dem seitlichen Steckeranschlußfeld 44 vorgesehen, weil auch dort Toleranzen zwischen dem Ende des Motherboards und der Seitenwand des Notebooks abgefangen werden müssen. Im übrigen sind auch zwischen den Seitenwänden 60 bis 72 und dem Deckel 84 oder 102 leitende Dichtschnüre oder leitende Dichtwulste als EMV-Kontakteinrichtung in der oben beschriebenen Weise vorgesehen, um das Motherboard 2 nach außen elektromagnetisch verträglich abzuschließen.

Obwohl die Ausführungsbeispiele der Erfindung im Zusammenhang mit einem Notebook beschrieben wurden, ist zu beachten, daß auch andere portable PCs gemäß der Erfindung aufgebaut werden können.

## Patentansprüche

1. PC, der in einem Gehäuse mit einem Deckel, einer Unterschale, Seitenwänden und einer Gehäuserückwand ein Motherboard (2) mit Rechnerkomponenten, wenigstens ein Steckeranschlußfeld (42) mit mehreren Schnittstellensteckern aufweist, wobei das Steckeranschlußfeld und ein bezüglich seiner Position im Innern des PCs kritischer Stecker mit dem Motherboard (2) verbunden sind,
**dadurch gekennzeichnet, dass**
das Motherboard (2) zur genauen Positionierung nahe bei dem kritischen Stecker (76) abgefangen ist, und daß wenigstens zwischen dem oberen und/oder unteren Rändern des Steckeranschlußfeldes (42) und dem Deckel ((84;102) beziehungsweise der Unterschale (86;104) des PCs eine leitende Dichtschnur (88,90) oder ein leitender Dichtwulst (108,110) als EMV-Kontakteinrichtung vorgesehen ist.

2. PC nach Anspruch 1,
**dadurch gekennzeichnet, dass**
die Abfangung eine punktförmige Verschraubung (78) zwischen dem Motherboard (2) und der Unterschale (86;104) des PCs ist.

3. PC nach Anspruch 1, **dadurch gekennzeichnet**, **dass** die Abfangung einen linienförmigen Anschlag zwischen dem Motherboard (2) und der Unterschale (86;104) des PCs aufweist.

4. PC nach Anspruch 1, **dadurch gekennzeich-net, dass** zusätzlich zwischen den Seitenwänden (60 bis 72)und dem Deckel (84;102) des PCs eine leitende Dichtschnur oder ein leitender Dichtwulst als EMV-Kontakteinrichtung vorgesehen ist.

5. PC nach einem der Ansprüche 1 bis 4,
**dadurch gekennzeichnet, dass**
der Durchmesser der Dichtschnur (88,90) oder des Dichtwulstes (108,110) größer ist als der Abstand vom Deckel des PCs zu den Seitenrändern des Steckeranschlußfeldes (42,44) oder zu den Seitenwänden (60 bis 72) des Gehäuses plus einem Toleranzabstand ist.

6. PC nach einem der vorhergehenden Ansprüche,
**dadurch gekennzeichnet, dass**
die Dichtschnur (88,90) in einem Graben (92;98) am Deckel (84;102) des PCs beziehungsweise an der Unterschale (86;104) des PCs angeordnet ist.

7. PC nach Anspruch 6,
**dadurch gekennzeichnet, dass**
der Graben (92,94) einen bogenförmigen Boden aufweist.

8. PC nach Anspruch 6,
**dadurch gekennzeichnet, dass**
der Graben (98,100) einen rechteckigen Querschnitt aufweist.

9. PC nach Anspruch 8,
**dadurch gekennzeichnet, dass**
die Breite des Grabens (98,100) größer als der Durchmesser der Dichtschnur (88,90) oder des Dichtwulstes (108,110) ist.

10. PC nach einem der vorhergehenden Ansprüche,
**dadurch gekennzeichnet, dass**
die Dichtschnur (88,90) ein von dem Steckeranschlußfeld (42) oder dem Deckel (84;102) separates Bauteil ist.

11. PC nach einem der Ansprüche 1 bis 9,
**dadurch gekennzeichnet, dass**
der Dichtwulst (108,110) mit den Seitenrädern des Steckeranschlußfeldes (42), vorzugsweise durch Dispensen, verbunden ist.

12. PC nach einem der vorhergehenden Ansprüche,
**dadurch gekennzeichnet, dass**
die Dichtschnur oder der Dichtwulst aus einem leitfähigen Kunststoffmaterial, vorzugsweise aus Silikon, besteht.

13. PC nach einem der vorhergehenden Ansprüche,
**dadurch gekennzeichnet, dass**
die Dichtschnur oder der Dichtwulst aus selbstklebendem Material bestehen.
